# EUROPEAN PATENT SPECIFICATION

(11) **EP 3 751 993 B1**
(45) Date of publication and mention of the grant of the patent: **01.05.2024**
(21) Application number: 19714836.4
(22) Date of filing: 22.01.2019
(51) Int. Cl.: A01K 1/00, A01K 1/01

(54) **CATTLE BARN WITH AIRWASHER**
VIEHSTALL MIT LUFTWASCHANLAGE
ÉTABLE À BÉTAIL AVEC PURIFICATEUR D'AIR

(30) Priority: 12.02.2018 NL 2020416
(43) Date of publication of application: 23.12.2020
(73) Proprietor: Lely Patent N.V., 3147 PB Maassluis (NL)
(72) Inventor: ROSCAM ABBING, Ernst Arnout, 3147 PB Maassluis (NL); VAN SCHIE, Petrus Johannes, 3147 PB Maassluis (NL); VAN DEN BERG, Maarten, 3147 PB Maassluis (NL); BLOKLAND, Korstiaan Cornelis, 3147 PB Maassluis (NL); VAN DEN BERG, Karel, 3147 PB Maassluis (NL)
(74) Representative: Octrooibureau Van der Lely N.V.
(86) International application number: PCT/NL2019/050032
(87) International publication number: WO 2019/156551

(56) References cited:
- EP-A1- 0 637 907
- EP-A1- 3 205 205
- US-B1- 8 181 604
- US-B2- 7 194 979

## Description

The present invention relates to a livestock shed for keeping livestock animals, and comprising
- a shed building for keeping the livestock animals in an animal space, having a floor which is at least partially permeable to excretory products from the livestock animals,
- a liquid-tight manure cellar for collecting excretory products which is situated at least partly under the floor, and
- an air scrubber connected to the manure cellar and configured to at least partly clean polluted manure cellar air.

Such livestock sheds are known. Here, the air-scrubbing device serves to reduce the emission of harmful substances, such as ammonia, which are generated by (factory) farming. To this end, manure cellar air containing ammonia and the like is passed through a column with acidified scrubbing liquid, so that the ammonia in the manure cellar air reacts to form dissolved ammonium. The air stripped of ammonia is discharged into the atmosphere. The dissolved ammonium results in a useful fertilizer, for example in the form of ammonium sulfate if scrubbing liquid has been used which was acidified using sulfuric acid.

EP 0 637 907 A1 discloses an animal shed, for instance for pigs. Shed air is guided for discharge to the outside atmosphere through sprayed washing liquid so that the air is cleaned of ammonia and dust.

A drawback of known livestock sheds comprising an air-scrubbing device is that these often require an unnecessarily complicated construction, in particular also to prevent dangerous situations which could result from leaks in the system.

It is an object of the present invention to provide a livestock shed which at least partly removes said drawback.

To this end, the invention provides a livestock shed according to Claim 1, in particular a livestock shed for keeping livestock animals, and comprising a shed building for keeping the livestock animals, having a floor which is at least partially permeable to excretory products from the livestock animals, a liquid-tight manure cellar for collecting excretory products which is situated at least partly under the floor, and an air scrubber connected to the manure cellar and configured to at least partly clean polluted manure cellar air, wherein the air scrubber is provided directly above the manure cellar, and wherein the air scrubber comprises an air inlet, an air scrubbing filter, a scrubbing liquid circuit and an air outlet, and wherein the air inlet is directly connected to the manure cellar, and wherein a portion of the manure cellar, in projection, extends beyond a footprint of the shed building, said portion being situated on the outside of the outer walls of the livestock shed, wherein the air scrubber rests on said portion.

Therefore, not only is a very simple and compact livestock shed provided, which may already ensure inherent safety, but also, use is thus made of the fact that there is now a liquid-tight collecting trough under the air scrubber, and in particular the part of the air scrubber where the absorption of ammonia takes place, i.e. the column. Should there now be a leak in the air scrubber or in a part of the air scrubber which is situated close by, the manure cellar will function as a collecting trough and the scrubbing liquid is able to run into the manure cellar, from where it cannot escape to the environment. There is then a greater chance of and more time to limit and fix the consequences of the leak, without the need for complicated building structures.

The air scrubber rests on a part of the manure cellar, in particular a mixing pit. The manure cellar is almost always a strong trough-shaped concrete construction. By resting the air scrubber thereon, an inherently strong foundation is provided for the air scrubber without requiring additional measures. This is of particular interest for existing sheds which have to be modified in order to install an air scrubber. In those cases, no new foundation for the air scrubber is required.

The air scrubber comprises an air inlet, an air scrubbing filter, scrubbing liquid circuit and an air outlet, wherein the air inlet is directly connected to the manure cellar. Such a connection does not require any pipes and has a large passage. Both effects ensure a low pressure drop of the stream of manure cellar air to the air scrubber. Due to the low pressure drop, an exhaust system of relatively low power is sufficient.

A portion of the manure cellar, in projection, extends beyond a footprint of the shed building, wherein the air scrubber rests on said portion. Such an extending part is often used as a mixing pit to mix the manure in the manure cellar using a mixer and to suck manure out of the manure cellar. The mixing pit is thus viewed as a constituent part of the manure cellar. Such a mixing pit is often installed as standard in conventional livestock sheds. As a result of the fact that the portion extends beyond the
base surface area, it is situated on the outside of the outer walls of the livestock shed, safely separated from the dwelling space of the livestock animals.

In a further advantageous embodiment of the invention, the air inlet, in projection, does not extend beyond a footprint of the manure cellar anywhere. Should dangerous gases or liquids be produced in the air scrubber, then these can only flow out to the closed manure cellar via the air inlet and not to the outdoor air or shed area.

In a further embodiment of the invention, the livestock shed comprises a plurality of air scrubbers, each comprising an air inlet, an air scrubbing filter, a scrubbing liquid circuit and an air outlet, wherein the scrubbing liquid circuits are connected to each other, in particular in series. This results in a simple and cost-saving construction in which a plurality of air scrubbers can make use of the same central unit comprising sensors, storage and pumps. Due to the fact that the manure cellar air is passed to separate air scrubbers at a plurality of locations, the air does not have to be conveyed over long
distances. By using a plurality of air scrubbers, cleaning can still continue in the case of failure or maintenance of an air scrubber.

In a further particular embodiment of the invention, the manure cellar comprises a plurality of manure cellar compartments, each having a dedicated air scrubber. This offers the possibility of treating each manure cellar compartment differently. This is particularly advantageous if the manure cellar compartment is associated with a dedicated shed compartment with a separate animal space, so that the air scrubbing can be adapted to the number of or type of animals present in the shed compartment.

It is advantageous if the manure cellar compartments are separated from each other in a liquid-tight manner. As a result thereof, any liquid which leaks out of the air scrubber in case of a leak cannot spread across the entire manure cellar, but remains limited to a part of the entire manure cellar.

It is even more advantageous if the floor comprises a plurality of openings which are configured to allow the wet fraction of the excretory products to pass through and to retain the solid fraction. The expression wet fraction is understood to mean mainly the urine and the expression solid fraction to mean mainly faeces. A complete separation of urine and faeces is impossible and in practice some lumps of faeces will pass through the openings and some urine will remain behind on the floor surface. By means of such a floor, the urine is separated from the faeces situated on the floor almost immediately after excretion by the animal. The faeces contain enzymes which are able to convert the urea in the urine quickly into ammonia which can readily evaporate. By quickly separating the urine, this reaction hardly takes place and all nitrogen is passed to the manure cellar.

It is furthermore advantageous if the livestock shed comprises a manure removal device, such as a manure slide, for removing the solid fraction of the excretory products. By removing the solid fraction of the excretory products from the shed floor as quickly as possible, the liquid in the manure cellar will have a urine content which is as high as possible, thus resulting in a pure stream of manure. The solid fraction can be used as a separate stream of manure with separate properties.

It is even more advantageous if the air scrubber furthermore comprises a shed air inlet which is directly connected to the animal space of the livestock shed in order to take in shed air. Using the air scrubber, it is thus also possible to suck out and clean the ambient air of the livestock animals directly. Particularly in the cold winter months, it has been found that additional water of condensation ends up in the air scrubber, which results in an undesirable increase in volume of the scrubbing liquid. Because the shed air contains less water vapour than manure cellar air, a proportion of shed air will cause less water of condensation.

The invention will be explained below by means of one or more exemplary embodiments and the drawing, in which:
Fig. 1 diagrammatically shows a cross section of a shed comprising an air scrubber, and
Fig. 2 diagrammatically shows a top view of a shed comprising a plurality of air scrubbers and a plurality of manure cellar compartments.

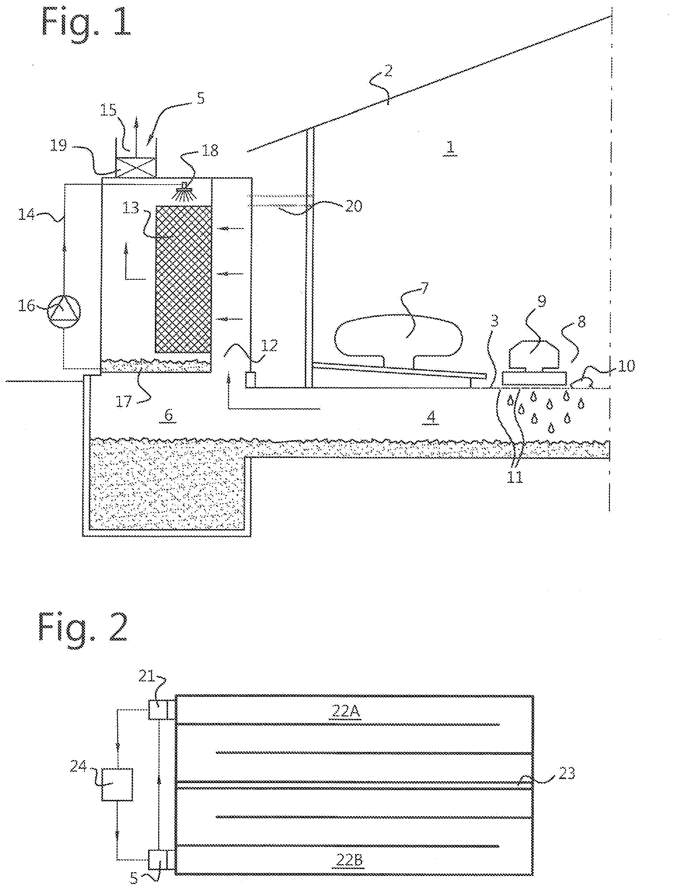

Fig. 1 shows a livestock shed 1 for keeping livestock animals, and comprising a shed building 2 for keeping the livestock animals in an animal space, having a floor 3 which is at least partially permeable to excretory products from the livestock animals, a liquid-tight manure cellar 4 for collecting excretory products which is situated at least partly under the floor, and an air scrubber 5 connected to the manure cellar 4 and configured to at least partly clean polluted manure cellar air, wherein the air scrubber 5 is provided directly above the manure cellar 4. A mixing pit 6 forms part of the manure cellar 4 and is recessed. The illustration shows a livestock shed 1 configured as a typical free-range livestock shed for cattle with a cubicle part 7 and a slurry passage 8. The animals will relieve themselves mainly on this slurry passage 8.

The illustration shows a manure removal device 9 for removing the solid fraction (faeces 10) of the excretory products. This manure removal device 9 is designed in the form of an autonomously navigating vehicle which sucks up the faeces 10 and dumps it in a dump pit (not shown). The manure removal device 9 may also be designed as a mechanical slide which is known per se and is pulled by a chain or rope. This slides across the slurry passage 8 at set times and pushes the solid manure towards the end and into a dump pit.

The floor 3 of the shed comprises a plurality of openings 11 which are configured to allow the wet fraction of the excretory products (main component urine) to pass through and to retain the solid fraction (main component faeces). Urine passes through these openings 11 into the manure cellar 4. The faeces 10 remain behind on the floor 3. A layer of liquid forms in the manure cellar 4. The manure cellar air situated above said layer contains high concentrations of ammonia and other volatile substances, such as the damaging hydrogen sulfide, which evaporate from the liquid.

The manure cellar 4 extends, in projection, into a portion beyond a footprint of the shed building 2, in which case the air scrubber 5 rests on that portion. The walls of the manure cellar 4 including the mixing pit 6 are often made of strong concrete and form a good foundation for the air scrubber 5. The air scrubber 5 comprises an air inlet 12, an air scrubbing filter 13, scrubbing liquid circuit 14 and an air outlet 15, wherein the air inlet 12 is connected directly to the manure cellar 4. The air inlet 12 does not extend, in projection, beyond a footprint of the manure cellar 4 anywhere.

A circulation pump 16 is fitted in order to pass scrubbing liquid from the collection reservoir 17 over the air scrubbing filter 13 continuously via a spray head 18.

In operation, a strong fan 19 of the air scrubber 5 provides a negative pressure which pulls the manure cellar air through the air scrubbing filter 13 via the inlet 12. In this air scrubbing filter 13, the manure cellar air comes into contact with acidic scrubbing liquid, as a result of which harmful substances in the manure cellar air, including ammonia, are taken up in the scrubbing liquid. Dust from the animal space in the shed which passes into the manure cellar 4 through the openings 11 is also captured by the air scrubber 5.

If there occurs an unexpected leak in, for example, the air scrubbing filter 13, lines of the scrubbing liquid circuit 14 or in the collection reservoir 17, then the leaking liquid will flow into the manure cellar 4 via the air outlet 12. Here, the leaked liquid will be greatly diluted by the liquid in the manure cellar 4 and will be rendered harmless.

The air scrubber 5 furthermore comprises a shed air inlet 20 which is directly connected to the animal space of the livestock shed 1. This makes additional cleaning of the shed air using the same air scrubber 5 possible.

Fig. 2 diagrammatically shows a top view of a livestock shed 1 with a plurality of air scrubbers 5, 21, each comprising an air inlet 12, an air scrubbing filter 13, a scrubbing liquid circuit 14 and an air outlet, wherein the scrubbing liquid circuits are connected to each other in series. The flow of the scrubbing liquid is shown diagrammatically here by means of arrows. In this case, the scrubbing liquid from the collection reservoir 17 of air scrubber 5 is pumped to the spray head of air scrubber 21. The manure cellar 4 comprises a plurality of manure cellar compartments 22A, 22B, each having a dedicated air scrubber 5, 21, fitted above the respective mixing pit of each compartment 22A, 22B. The two illustrated manure cellar compartments 22A, 22B are separated from each other in a liquid-tight manner by a wall 23. When one of the two air scrubbers 5, 21 leaks, the leaked scrubbing liquid will not be able to spread across the entire manure cellar 4, but will be contained to only one compartment 22A, 22B.

Both air scrubbers 5, 21 from Fig. 2 have a common central unit 24. This central unit 24 contains various sensors (not shown) for measuring, inter alia, the pH and the conductivity and control means for replenishing or replacing the scrubbing liquid. By uncoupling the central unit 24 from the actual air scrubber 5, 21, the air scrubber 5, 21 can remain relatively small, with a limited base surface area, and can thus be fitted in its entirety above a(n existing) mixing pit 6.

Here, a floor 3 having relatively small openings 11 for allowing substantially only urine to pass through is illustrated and described. However, the invention is not limited thereto. The floor 3 may also be configured as a standard slatted floor with sufficiently large slotted openings through which urine and faeces pass and land in the manure cellar 4 together in the form of so-called slurry.

## Claims

1. Livestock shed (1) for keeping livestock animals, and comprising
- a shed building (2) for keeping the livestock animals in an animal space, having a floor (3) which is at least partially permeable to excretory products from the livestock animals,
- a liquid-tight manure cellar (4) for collecting excretory products which is situated at least partly under the floor (3), and
- an air scrubber (5) connected to the manure cellar (4) and configured to at least partly clean polluted manure cellar air,
wherein the air scrubber (5) is provided directly above the manure cellar (4), and wherein the air scrubber (5) comprises an air inlet (12), a scrubbing liquid circuit (14) and an air outlet (15), and wherein the air inlet (12) is directly connected to the manure cellar (4), **characterized in that** the air scrubber (5) comprises an air scrubbing filter (13), and **that** a portion of the manure cellar (4), in projection, extends beyond a footprint of the shed building (2), said portion being situated on the outside of the outer walls of the livestock shed (1), wherein the air scrubber (5) rests on said portion.

2. Livestock shed (1) according to Claim 1, **characterized in that** the air scrubber (5) rests on a part of the manure cellar (4), in particular a mixing pit (6).

3. Livestock shed (1) according to Claim 1 or 2, **characterized in that** the air inlet (12), in projection, does not extend beyond a footprint of the manure cellar (4) anywhere.

4. Livestock shed according to one of the preceding claims, **characterized in that** the livestock shed comprises a plurality of air scrubbers (5, 21), each comprising an air inlet (12), an air scrubbing filter (13), a scrubbing liquid circuit (14) and an air outlet (15), wherein the scrubbing liquid circuits are connected to each other, in particular in series.

5. Livestock shed (1) according to Claim 4, **characterized in that** the manure cellar (4) comprises a plurality of manure cellar compartments (22A, 22B), each having a dedicated air scrubber (5, 21).

6. Livestock shed (1) according to Claim 5, **characterized in that** the manure cellar compartments (22A, 22B) are separated from each other in a liquid-tight manner.

7. Livestock shed (1) according to one of the preceding claims, **characterized in that** the floor (3) comprises a plurality of openings (11) which are configured to allow the wet fraction of the excretory products to pass through and to retain the solid fraction.

8. Livestock shed (1) according to one of the preceding claims, furthermore comprising a manure removal device (9), such as a manure slide, for removing the solid fraction of the excretory products.

9. Livestock shed (1) according to one of the preceding claims **characterized in that** the air scrubber (5) furthermore comprises a shed air inlet (20) which is directly connected to the animal space of the livestock shed (1) in order to take in shed air

## Patentansprüche

1. Viehstall (1) zur Viehhaltung, und umfassend:
- ein Stallgebäude (2) zur Haltung der Viehtiere in einem Tierraum mit einem Boden (3), der mindestens teilweise für Ausscheidungsprodukte der Viehtiere durchlässig ist,
- einen flüssigkeitsdichten Güllekeller (4) zum Sammeln von Ausscheidungsprodukten, der sich mindestens teilweise unter dem Boden (3) befindet, und
- eine Luftwaschanlage (5), die mit dem Güllekeller (4) verbunden und dazu ausgelegt ist, verunreinigte Güllekellerluft mindestens teilweise zu reinigen,
wobei die Luftwaschanlage (5) direkt oberhalb des Güllekellers (4) vorgesehen ist, und wobei die Luftwaschanlage (5) einen Lufteinlass (12), einen Waschflüssigkeitskreislauf (14) und einen Luftauslass (15) umfasst, und wobei der Lufteinlass (12) direkt mit dem Güllekeller (4) verbunden ist, **dadurch gekennzeichnet, dass** die Luftwaschanlage (5) einen Luftwaschanlagefilter (13) umfasst, und **dass** ein Abschnitt des Güllekellers (4) sich in Projektion über eine Grundfläche des Stallgebäudes (2) hinaus erstreckt, wobei der Abschnitt an der Außenseite der Außenwände des Viehstalls (1) angeordnet ist, wobei die Luftwaschanlage (5) auf dem Abschnitt ruht.

2. Viehstall (1) gemäß Anspruch 1, **dadurch gekennzeichnet, dass** die Luftwaschanlage (5) auf einem Teil des Güllekellers (4), insbesondere einer Mischgrube (6), aufliegt.

3. Viehstall (1) gemäß Anspruch 1 oder 2, **dadurch gekennzeichnet, dass** der Lufteinlass (12) in der Projektion nirgends über eine Grundfläche des Güllekellers (4) hinausragt.

4. Viehstall gemäß einem der vorhergehenden Ansprüche, **dadurch gekennzeichnet, dass** der Viehstall eine Vielzahl von Luftwaschanlagen (5, 21) umfasst, die jeweils einen Lufteinlass (12), einen Luftwaschfilter (13), einen Waschflüssigkeitskreislauf (14) und einen Luftauslass (15) umfassen, wobei die Waschflüssigkeitskreisläufe, insbesondere in Reihe, miteinander verbunden sind.

5. Viehstall (1) gemäß Anspruch 4, **dadurch gekennzeichnet, dass** der Güllekeller (4) eine Vielzahl von Güllekellerabteilen (22A, 22B) umfasst, die jeweils eine eigene Luftwaschanlage (5, 21) aufweisen.

6. Viehstall (1) gemäß Anspruch 5, **dadurch gekennzeichnet, dass** die Güllekellerabteile (22A, 22B) flüssigkeitsdicht voneinander getrennt sind.

7. Viehstall (1) gemäß einem der vorhergehenden Ansprüche, **dadurch gekennzeichnet, dass** der Boden (3) eine Vielzahl von Öffnungen (11) umfasst, die dazu ausgelegt sind, den feuchten Anteil der Ausscheidungsprodukte durchzulassen und den festen Anteil zurückzuhalten.

8. Viehstall (1) gemäß einem der vorhergehenden Ansprüche, ferner umfassend eine Gülleentfernungsvorrichtung (9), wie z. B. eine Güllerutsche, zum Entfernen des festen Anteils der Ausscheidungsprodukte.

9. Viehstall (1) gemäß einem der vorhergehenden Ansprüche, **dadurch gekennzeichnet, dass** die Luftwaschanlage (5) ferner einen Stalllufteinlass (20) umfasst, der direkt mit dem Tierraum des Viehstalls (1) verbunden ist, um Stallluft anzusaugen.

## Revendications

1. Étable à bétail (1) destinée à l'élevage du bétail, et comprenant
- un bâtiment d'élevage (2) pour élever le bétail dans un espace pour animaux, ayant un plancher (3) qui est au moins partiellement perméable aux produits excrétoires du bétail,
- une cave à purin étanche aux liquides (4) destinée à recueillir les produits excrétoires qui est située au moins en partie sous le plancher (3), et
- un épurateur d'air (5) relié à la cave à purin (4) et conçu pour nettoyer au moins partiellement l'air pollué de la cave à purin,
l'épurateur d'air (5) étant placé directement au-dessus de la cave à purin (4), et l'épurateur d'air (5) comprenant une entrée d'air (12), un circuit de liquide d'épuration (14) et une sortie d'air (15), et l'entrée d'air (12) étant directement reliée à la cave à purin (4), **caractérisée en ce que** l'épurateur d'air (5) comprend un filtre d'épuration d'air (13), et **en ce qu'**une partie de la cave à purin (4), en saillie, s'étend au-delà d'une empreinte au sol du bâtiment d'élevage (2), ladite partie étant située à l'extérieur des murs extérieurs de l'étable à bétail (1), l'épurateur d'air (5) reposant sur ladite partie.

2. Étable à bétail (1) selon la revendication 1, **caractérisée en ce que** l'épurateur d'air (5) repose sur une partie de la cave à purin (4), en particulier une fosse de mélange (6).

3. Étable à bétail (1) selon la revendication 1 ou 2, **caractérisée en ce que** l'entrée d'air (12), en saillie, ne s'étend nulle part au-delà d'une empreinte au sol de la cave à purin (4).

4. Étable à bétail selon l'une des revendications précédentes, **caractérisée en ce que** l'étable à bétail comprend une pluralité d'épurateurs d'air (5, 21), chacun comprenant une entrée d'air (12), un filtre d'épuration d'air (13), un circuit de liquide d'épuration (14) et une sortie d'air (15), les circuits de liquide d'épuration étant reliés les uns aux autres, notamment en série.

5. Étable à bétail (1) selon la revendication 4, **caractérisée en ce que** la cave à purin (4) comprend une pluralité de compartiments de cave à purin (22A, 22B), chacun ayant un épurateur d'air (5, 21) dédié.

6. Étable à bétail (1) selon la revendication 5, **caractérisée en ce que** les compartiments de cave à purin (22A, 22B) sont séparés les uns des autres d'une manière étanche aux liquides.

7. Étable à bétail (1) selon l'une des revendications précédentes, **caractérisée en ce que** le plancher (3) comprend une pluralité d'ouvertures (11) qui sont conçues pour laisser passer la fraction humide des produits excrétoires et pour retenir la fraction solide.

8. Étable à bétail (1) selon l'une des revendications précédentes, comprenant en outre un dispositif d'élimination de fumier (9), tel qu'un toboggan à fumier, pour éliminer la fraction solide des produits excrétoires.

9. Étable à bétail (1) selon l'une des revendications précédentes **caractérisée en ce que** l'épurateur d'air (5) comprend en outre une entrée d'air d'étable (20) qui est directement reliée à l'espace pour animaux de l'étable à bétail (1) afin d'aspirer de l'air de l'étable.
